# EUROPÄISCHE PATENTANMELDUNG

(11) **EP 3 184 207 A1**
(43) Veröffentlichungstag der Anmeldung: **28.06.2017**
(21) Anmeldenummer: 15201622.6
(22) Anmeldetag: 21.12.2015
(51) Int. Cl.: B22F 3/105, B22F 3/11, B22F 3/24, B29C 67/00

(54) **VERFAHREN ZUM HERSTELLEN EINES PORÖSEN BAUTEILS SOWIE PORÖSES BAUTEIL**

(71) Anmelder: Siemens Aktiengesellschaft, 80333 München (DE)
(72) Erfinder: Bittner, Roland, 91522 Ansbach (DE); Hösle, Markus, 91058 Erlangen (DE)

(57) **Zusammenfassung**

Die Erfindung betrifft ein Verfahren zum Herstellen eines porösen Bauteils mit einstellbarer Struktur, wobei das Bauteil Zellwände (2) aufweist, die zumindest teilweise Poren (4) abgrenzen. Das poröse Bauteil wird dabei durch ein generatives Fertigungsverfahrens, insbesondere durch einen 3D-Druck, gefertigt, so dass durch eine Größe und/oder eine Orientierung der Zellwände (2) und/oder der Poren (4) physikalische Eigenschaften des porösen Bauteils, die für seinen Einsatz gewünscht oder erforderlich sind, eingestellt werden.

## Beschreibung

Die Erfindung betrifft ein Verfahren zum Herstellen eines porösen Bauteils mit einstellbarer Struktur. Die Erfindung betrifft weiterhin ein poröses Bauteil hergestellt mittels eines solchen Verfahrens.

Auf verschiedenen technischen Gebieten kommen poröse Bauteile wie z.B. Metallschäume zum Einsatz. Als Metallschaum wird ein poröser Schaum bzw. eine Porenstruktur auf der Basis von metallischen Werkstoffen bezeichnet. Metallschäume besitzen eine durch Poren bzw. Hohlräume bedingte geringe Dichte, weisen damit wenig Gewicht, aber eine hohe spezifische Steifigkeit und Festigkeit auf. Derartige Schäume aus Kupfer, Zink, Stahl bzw. Eisen können unter Verwendung geeigneter Treibmittel hergestellt werden. Die Porosität stellt insbesondere das Verhältnis von Hohlraumvolumen zu Gesamtvolumen eines Stoffes oder Stoffgemisches dar. Sie kann als klassifizierendes Maß für die tatsächlich vorliegenden Hohlräume dienen.

Ein Metallschaum kann - wie in der klassischen Schaumstoffindustrie - als geschlossenzelliger Metallschaum (die Zellwände zwischen den einzelnen Zellen sind komplett geschlossen), offenzelliger Metallschaum (die Zellwände sind nicht geschlossen, die Poren können daher Flüssigkeiten oder Gase aufnehmen) oder gemischtzelliger Metallschaum (beide Arten von Zellen) ausgebildet sein.

Metallschäume werden in der Regel durch chemische oder physikalische Verfahren hergestellt. Dabei sind die einzelnen strukturellen Parameter wie Porosität, Stegbreite der Zellenwände, Geometrie der Poren oder Materialzusammensetzung der Zellwände des Metallschaumes aufgrund des unkontrollierbaren, nicht zwangsläufig reproduzierbaren Schäumungsprozesses vergleichsweise schwer einzustellen.

Grundsätzlich sind für Metallschäume die klassischen Herstellverfahren, wie bei Schaumstoffen geeignet, wie:
- Physikalisches Schäumen: Das Material wird durch einen physikalischen Vorgang geschäumt; so kann Gas in eine Metallschmelze eingeblasen werden, die zuvor durch Zugabe fester Bestandteile schäumbar gemacht wurde.
- Chemisches Schäumen: Einem Granulat wird ein Treibmittel, meist in Form eines so genannten Masterbatchgranulates, zugegeben. Durch Wärmezufuhr spaltet sich ein flüchtiger Bestandteil des Treibmittels ab, was zum Aufschäumen der Schmelze führt; Metallschäume können dabei mittels Metallpulver und einem Metallhydrid hergestellt werden; beide Pulver werden miteinander vermischt und durch Heißpressen oder Strangpressen zu einem Vormaterial verdichtet; das Vormaterial wird dann auf eine Temperatur oberhalb des Schmelzpunktes des Metalls erhitzt; dabei setzt das Metallhybrid gasförmigen Wasserstoff frei und schäumt das Gemenge auf.
- Mechanisches Schäumen: Hierbei wird Luft in das zu schäumende Metall oder eine Paste eingerührt; durch Vernetzen des Metalls oder durch Gelieren der Paste verfestigt sich dieser Metallschaum.

Nachteilig ist dabei, dass durch die "chaotischen" Prozesse bei den bekannten Herstellungsverfahren für Bauteile mit einer porösen Struktur die für die konkrete Anwendung optimalen Parameter, wie z.B. elektrische und magnetische Leitfähigkeit, Elastizität, etc. nicht exakt einstellbar und nicht reproduzierbar sind.

Eine Aufgabe der vorliegenden Erfindung ist es eine Herstellung eines porösen Bauteils zu ermöglichen, bei der die für jeweiligen Einsatz des porösen Bauteils gewünschten oder erforderlichen Eigenschaften einstellbar sind.

Eine Lösung der Aufgabe ergibt sich durch ein Verfahren zum Herstellen eines porösen Bauteils mit einstellbarer Struktur, wobei das poröse Bauteil Zellwände aufweist, die zumindest teilweise Poren abgrenzen, wobei das poröse Bauteil durch ein generatives Fertigungsverfahrens, insbesondere durch einen 3D-Druck, gefertigt wird und wobei durch eine Größe und/oder eine Orientierung der Zellwände und/oder der Poren physikalische Eigenschaften des porösen Bauteils eingestellt werden.

Eine weitere Lösung der Aufgabe ergibt sich durch ein poröses Bauteil hergestellt mittels eines solchen Verfahrens.

Die in Bezug auf das Verfahren nachstehend angeführten Vorteile und bevorzugten Ausgestaltungen lassen sich sinngemäß auf das poröse Bauteil übertragen.

Unter generativem Fertigungsverfahren wird ein Verfahren für additive Fertigung (engl. additive manufacturing) verstanden, bei dem Werkzeuge, Halbzeuge oder Endprodukte schnell und kostengünstig gefertigt werden. Die Fertigung erfolgt direkt auf der Basis von rechnerinternen Datenmodellen aus formlosem (Flüssigkeiten, Pulver u. ä.) oder formneutralem (band-, drahtförmigem) Material mittels chemischer und/oder physikalischer Prozesse. Eine solche Herstellung wird zudem als 3D-Druck bezeichnet. Zum 3D-Druck gehören z.B. selektives Laserschmelzen (SLM), selektives Lasersintern (SLS), Laser Metal Deposition (LMD), Fused Deposition Molding (FDM), etc.

Mit Zellwänden werden hierbei die räumlichen Begrenzungen der Hohlräume oder Poren innerhalb des porösen Bauteils bezeichnet. Die Zellwände können zwei - oder dreidimensionale Flächen darstellen, können aber auch als Stege ausgestaltet sein. Je nach Art und Vernetzung der Zellwände können die Poren offen sein (bezogen auf die Zellenwände bedeutet dies, dass die Zellenwände entweder Durchbrüche aufweisen oder als Stege ausgestaltet sind), d.h. miteinander verbunden, oder die Poren können geschlossen sein, indem sie einzeln vollständig von den Zellwänden umschlossen sind. Es können auch gemischte Strukturen und offenen und geschlossenen Poren gefertigt werden.

Unter Bauteil wird eine vollständige, ein- oder mehrteilige Komponente oder auch nur ein Teil einer Komponente für eine technische Anwendung verstanden.

Die einstellbaren physikalischen Eigenschaften sind insbesondere die mechanischen und die magnetischen (die magnetische Permeabilität und/oder Remanenz) des porösen Bauteils. Weitere einstellbare physikalische Eigenschaften können z.B. die Dichte, die Härte, die Verformbarkeit sowie die Wärmeleitfähigkeit und die elektrische Leitfähigkeit sein. Durch die Materialwahl und dem Aufbau der Struktur bzw. des porösen Bauteils können auch chemische Eigenschaften beeinflusst werden, z.B. die Korrosionsbeständigkeit oder die Reaktivität der Zellwände gegenüber verschiedenen anderen Stoffen.

Die Erfindung basiert auf der Überlegung, ein poröses Bauteil mit einer Porenstruktur, ähnlich einem Metallschaum, durch ein generatives Fertigungsverfahren, insbesondere 3D-Druck, herzustellen. Es wird also eine vorgebbare Schaumstruktur durch 3D-Druck nachgebildet. Auf diese Weise sind im Fertigungsprozess die einzelnen geometrischen Parameter, wie z.B. Poren- oder Zellgröße, die Dicke der einzelnen Zellwände, die Anordnungen der Zellen innerhalb des Metallschaumes nach vorgegebenem Muster (z.B. bekannte Kristallstrukturen), einstellbar. Die gewählten geometrischen Eigenschaften der Porenstruktur machen es ihrerseits möglich, die physikalischen, mechanischen und/oder elektrischen Eigenschaften des porösen Bauteils gezielt und reproduzierbar einzustellen. Bevorzugt weist dabei die einstellbare Struktur einen symmetrischen Aufbau auf. Der symmetrische Aufbau ist insbesondere unabhängig vom Herstellungsverfahren gewährleistet. Unter "symmetrisch" wird hierbei eine geometrische Symmetrie in den unterschiedlichen Raumrichtungen verstanden, oder alternativ eine materialbezogene Symmetrie, indem die verschiedenen Bereiche des porösen Bauteils aus unterschiedlichen Materialen gebildet sind, welche in geometrischer Relation zueinander stehen. Es können dabei zumindest zwei, bevorzugt mehrere poröse Bauteile hergestellt werden, welche in geometrischer und materialtechnischer Sicht die gleiche Struktur aufweisen und deshalb beliebig gegeneinander austauschbar sind. Auch kann ein Bauteil im Reparaturfall zu einem späteren Zeitpunkt "nachgedruckt" werden. Es kann auch ein Teil eines vorliegenden porösen Bauteils ersetzt werden, wobei das Ersatzstück so gefertigt wird, dass Zellwände auf das vorhandene Bauteil passen. Das Bauteil kann auch zwei oder mehrere Teile aufweisen, die miteinander verbunden sind, wobei mittels des vorstehend beschriebenen Verfahrens die Zellwände aller Teile zueinander ausgerichtet sind.

Hinsichtlich der Poren können unterschiedlichste Varianten eingestellt werden. Beispielsweise kann die Porengröße von einer Seite des Bauteils zur anderen oder von innen nach außen zu- oder abnehmen. Auch andere Größenverteilungen sind denkbar. Die Poren können z.B. rotationssymmetrisch angeordnet sein. Die Poren des Bauteils bilden z.B. Kühlkanäle für eine Flüssigkeit aus. Darüber hinaus kann die Struktur einen schichtartigen Aufbau aufweisen, indem die Schichten bedingt durch die Materialwahl und die Geometrie der Zellenwände bzw. der Poren eine steife Porenschicht und/oder eine Porenschicht aufweist. Eine Porenschicht kann zudem elastisch ausgestaltet werden, d.h. ohne Einwirkung einer externen Druckkraft nimmt die Struktur ihre ursprüngliche Form wieder an.

Bei unterschiedlichsten industriellen Anwendungen gewährleistet ein Metallschaum insbesondere eine Gewichtsersparnis. Darüber hinaus liegen im Metallschaum ausreichend metallische Stege oder Zellwände zwischen den Hohlräumen bzw. Poren vor, die z.B. eine Dämpfung, eine nahezu verlustfreie Führung des Magnetflusses, unterschiedliche Festigkeiten in unterschiedlichen Raumrichtungen etc. gewährleisten. Die eingeschlossenen Hohlräume des Metallschaums dienen außerdem gleichzeitig der Unterdrückung von magnetischen Wirbelströmen.

Der Vorteil des 3D-Drucks ist, dass die Porenstruktur innerhalb eines Werkstückes gezielt einstellbar ist und sich auch unterscheiden kann, Pore für Pore, in ihrer Größe, Materialzusammensetzung, Wanddicke, Steglängen, Füllung. Beim 3D-Druck kann z.B. sowohl durch die Materialwahl als auch durch die Breite und Länge der einzelnen Zellwände und/oder Poren die magnetische und die elektrische Leitfähigkeit des porösen Bauteils vorgegeben werden. Ebenso kann die Elastizität in vorgegebenen Raumrichtungen eingestellt werden. Dabei kann für jeden Anwendungszweck eine geeignete Porenstruktur des porösen Bauteils hergestellt werden. Beispielsweise bei Radnabenmotoren (z.B. für Elektrofahrzeuge) können die Speichen und/oder die Felgen eine gedruckte Porenstruktur aufweisen, um das Gewicht bzw. die Trägheit zu reduzieren. Bei Antriebssystemen kann beispielsweise auch die Welle als ein solches poröses Bauteil gefertigt sein.

Für poröse Bauteile bzw. Metallschäume mit einstellbaren Eigenschaften sind verschiedene Anwendungsgebiete, insbesondere auch im Bereich der dynamoelektrischen Maschinen, vorstellbar. Ebenso kann ein poröses Bauteil im Automobilbau für Träger und Crashabsorber verwendet werden. Im Maschinenbau ist der Einsatz für bewegte und/oder schwingungsanfällige Baugruppen möglich. Durch die erfindungsgemäß individuell einstellbare Struktur, was die Länge und/oder Dicke der Zellwände bzw. Stege betrifft, wie auch die Größe der Poren, sind verschiedenste Eigenschaften bezüglich Steifigkeit, Elastizität, Durchströmbarkeit, Flexibilität usw. einstellbar.

Einsatzgebiete ergeben sich auch in der Bauindustrie für leichte Decken- und Wandelemente beispielsweise mit integrierten Komfortfunktionen wie einer Wärmespeicherung oder Brandschutz.

Auch im Schiffbau (Spanten, Aufbauten, usw.) und bei Schienenfahrzeugen (Bodenplatten, Crashabsorber, usw.) können Porenstrukturen zum Einsatz kommen.

Denkbar ist auch der Einsatz des porösen Bauteils als Katalysator in chemischen Prozessen.

Durch die Flexibilität des 3D-Drucks ist es möglich die Oberfläche und/oder die Durchlässigkeit (offene/geschlossene Poren) des gedruckten Gegenstandes zu variieren. Dies ist beispielsweise bei Katalysatoren oder bei Kühlkörpern vorteilhaft einsetzbar. Auch bei Akkumulatoren können mit einer einstellbaren Porenstruktur Vorteile erzielt werden.

Gemäß einer bevorzugten Variante werden die Zellwände des porösen Bauteils aus einem Metall und/oder einem Kunststoff hergestellt. Gemäß einer weiteren bevorzugten Variante werden die Zellwände des porösen Bauteils aus verschiedenen Materialien hergestellt. So können beispielsweise ein Metall und ein Kunststoff innerhalb eines porösen Bauteils gedruckt werden. Je nach Material oder Materialkombination werden somit verschiedene Eigenschaften wie z.B. Festigkeit, unterschiedlichen Steifigkeit in den jeweiligen Raumachsen, elektrische und magnetische Leitfähigkeit, etc. für die Anwendung des porösen Bauteils optimal gewählt und eingestellt. Beim Einsatz von mehreren Materialien ist es denkbar die einzelnen Zellwände unterschiedlich zueinander zu gestalten, so dass je nach Materialauswahl und -anordnung die einzelnen Zellwände unterschiedliche Eigenschaften aufweisen. Alternativ oder ergänzend können mehrere Zellwände aus dem gleichen Material oder gleichen Materialien zusammengesetzt sein, wobei jedoch der Aufbau innerhalb der Struktur des porösen Bausteils insbesondere schichtweise variiert wird. Eine Zellwand kann aus mehreren Materialien in Längs- oder Querrichtung zusammengesetzt sein. Vorzugsweise weist die einstellbare Struktur dabei mehrere Schichten auf. Auf diese Weise ist es möglich ein poröses Bauteil mit unterschiedlichen Steifigkeiten in den unterschiedlichen Schichten oder Ebenen zu fertigen. Auch können unterschiedliche Porengrößen in den unterschiedlichen Schichten eingestellt werden.

Die Eigenschaften des porösen Bauteils werden weiterhin variiert, indem bevorzugt die Poren während des Druckens des porösen Bauteils mit einem Gas, Kunststoff und/oder Wachs gefüllt werden.

Weiterhin bevorzugt wird die Oberfläche der Zellwände beschichtet, insbesondere mit einer Antioxidationsschicht. Somit ist es möglich bei einem Druckmaterial, welches leicht oxidiert, die Oberflächen um die Poren herum zu beschichten, um eine Oxidation zu verhindern. Es können jedoch auch andere Antikorrosionsbeschichtungen z.B. auf Epoxid- oder Kunststoffbasis aufgebracht werden, welche im Allgemeinen dazu dienen, im Einsatz des porösen Bauteils die Zellwände vor chemisch aggressive Medien zu schützen. Es ist auch denkbar funktionelle Beschichtungen aufzubringen, durch welche gewisse chemische oder physikalische Eigenschaften gewährleistet oder verstärkt werden.

Im Hinblick auf eine Erhöhung der Stabilität des porösen Bauteils verlaufen die Zellwände vorteilhafterweise längs einer zu erwarteten Kraftlinie. Bei Anwendungen, bei denen hohe Kräfte aufzunehmen sind und der Verlauf der Kraftlinien im Einsatz bekannt ist, werden die Zellwände so ausgebildet, dass sie sich vorwiegend längs der zu erwartenden Kraftlinien erstrecken.

Ausführungsbeispiele der Erfindung werden anhand einer Zeichnung näher erläutert. Hierin zeigen:
- FIG 1: einen Schnitt durch ein poröses Bauteil mit einer ersten Struktur,
- FIG 2: einen Schnitt durch ein poröses Bauteil mit einer zweiten Struktur,
- FIG 3: einen Schnitt durch ein poröses Bauteil mit einer dritten Struktur,
- FIG 4: in perspektivischer Ansicht mögliche Gitterstrukturen für ein poröses Bauteil,
- FIG 5: in perspektivischer Ansicht Oktaeder-Strukturen für ein poröses Bauteil,
- FIG 6: in perspektivischer Ansicht Strukturaufbau wie ein Pyrit-Kristall,
- FIG 7: einen Schnitt durch Strukturaufbau wie ein Mosaik-Kristall,
- FIG 8: in perspektivischer Ansicht ein Strukturaufbau nach Art von Kugelpackungen, und
- FIG 9: einen Schnitt durch ein poröses Bauteil mit einer vierten Struktur mit unterschiedlichen Rundungsradien.

Gleiche Bezugszeichen haben in den verschiedenen Figuren die gleiche Bedeutung.

Im Allgemeinen zeigen alle Figuren vergrößerte Detailansichten von verschiedensten möglichen Strukturen eines hier nicht näher gezeigten porösen Bauteils, welches mittels 3D-Druck hergestellt wird, wobei bei der Fertigung eine gewünschte Geometrie eingestellt wird. Viele dieser Strukturen sind u.a. aus der Chemie bekannt, da sie Kristall- oder Metallstrukturen bilden.

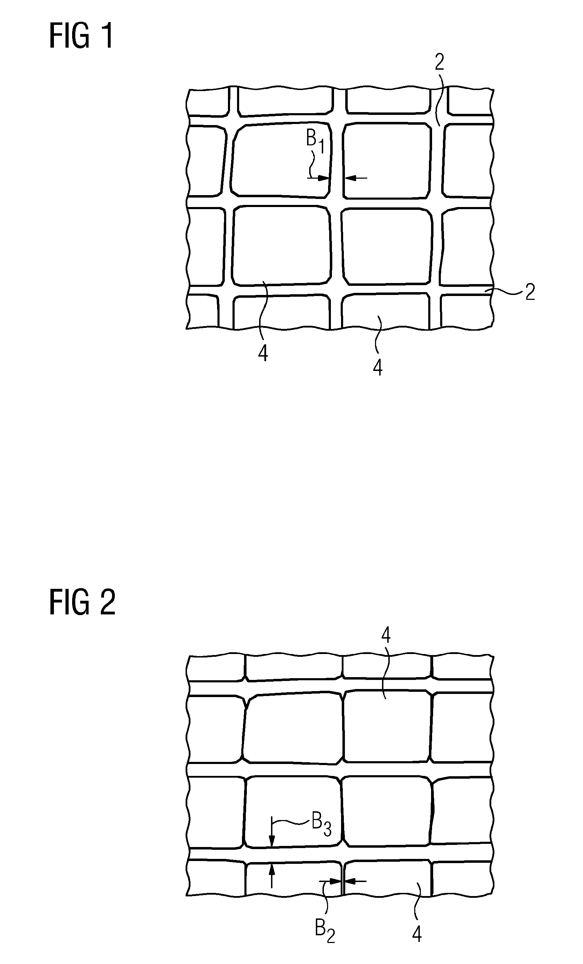

Aus FIG 1, FIG 2 und FIG 3 gehen zweidimensionale Ausschnitte durch poröse Bauteile hervor, wobei die jeweilige Porenstruktur des Bauteils im Querschnitt gezeigt ist.

In FIG 1 sind mit dem Bezugszeichen 2 Zellwände 2 bezeichnet, die nach Art von Stegen ausgebildet sind und sich gittermäßig in horizontaler und vertikaler Richtung erstrecken. In beiden Richtungen sind die Stege 2 etwa gleich breit und weisen eine Breite B₁ im Zentimeter-, Millimeter- oder Mikrometerbereich auf. Je nach Anwendung des porösen Bauteils können die Stege 2 auch breiter, insbesondere im Millimeterbereich, oder auch feiner ausgebildet sein.

Die Zellwände oder Stege 2 umschließen die Poren 4. Die Poren 4 sind in den Ausführungen gemäß FIG 1, FIG 2 und FIG 3 als geschlossene Poren ausgestaltet. Die Poren sind dabei hohl oder sie können auch z.B. mit einem Indikatorgas gefüllt sein, ggf. für den Einsatz auf dem Gebiet der Sensortechnik für eine Überwachung der Dichtigkeit oder des Verschleißes.

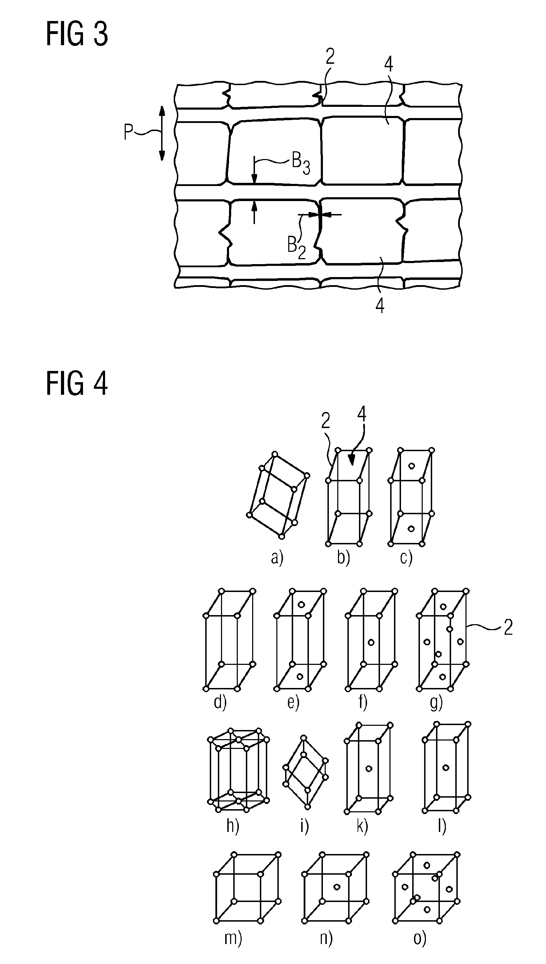

Im Unterschied zu FIG 1 weisen bei FIG 2 und FIG 3 die stegförmigen Zellwände 2 in Vertikalrichtung eine viel geringere Breite B₂ als die Breite B₃ der sich horizontal erstreckenden Zellwände auf. Dies führt zu unterschiedlicher Elastizität und unterschiedlicher elektrischer Leitfähigkeit in den beiden Raumrichtungen. Veranschaulicht ist die erhöhte Elastizität in der Vertikalrichtung durch den Pfeil P in FIG 3.

In FIG 4 sind weitere, dreidimensionale kristallgitterförmige Ausführungen der Porenstruktur eines porösen Bauteils dargestellt. Gezeigt sind im Einzelnen: a) triklines Gitter; b) einfaches monoklines Gitter; c) flächenzentriertes monoklines Gitter; d) einfach rhombisches Gitter; e) basischflächenzentriertes rhombisches Gitter; f) innenzentriertes rhombisches Gitter; g) allseitig-flächenzentriertes rhombisches Gitter; h) hexagonales Gitter; i) rhomboedrisches Gitter; k) einfaches tetragonales Gitter; l) innenzentrisches tetragonales Gitter; m) einfaches kubisches Gitter; n) innenzentrisches kubisches Gitter; o) flächenzentrisches kubisches gitter.

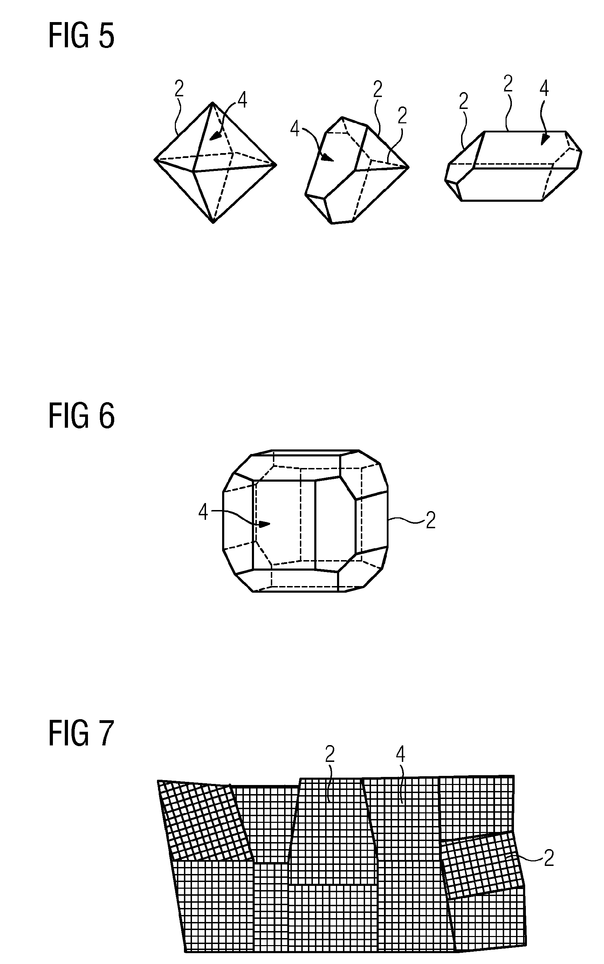

Aus FIG 5 sind weitere für die Formung des porösen Bauteils geeignete Strukturen zu entnehmen, die a) nach Art von einem idealen Oktaeder oder b) und c) als verzerrte Oktaeder ausgebildet sind.

Die Struktur des porösen Bauteils gemäß FIG 6 ist als ein Pyrit-Kristall geformt.

Aus FIG 7 ist eine Mosaikstruktur für das poröse Bauteil zu entnehmen. Die in der Mosaikstruktur eingebaute Stufenversetzung sorgt für bessere Verformbarkeit des porösen Bauteils.

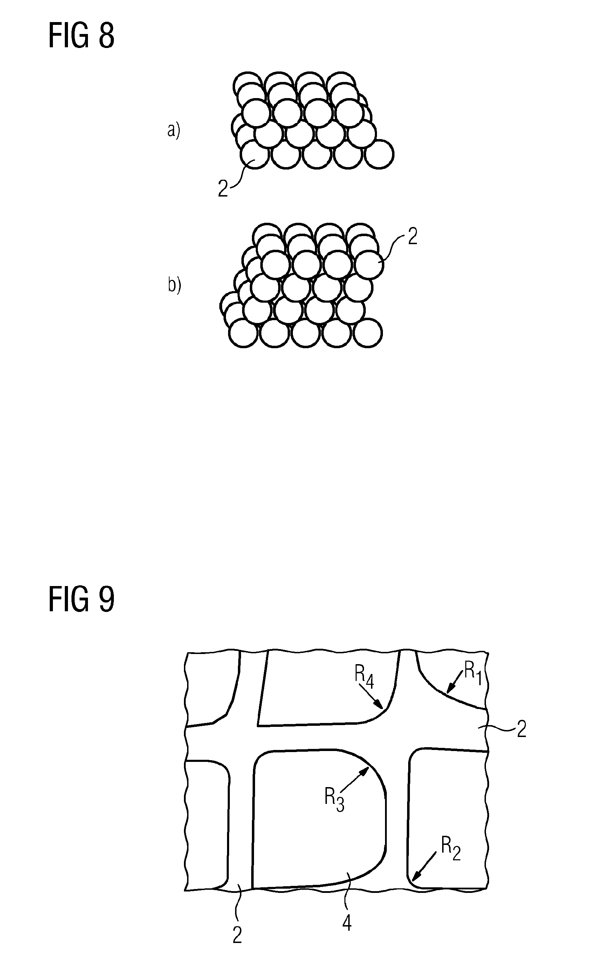

Die Poren 4 des porösen Bauteils sind gemäß FIG 8 sphärisch ausgebildet und vollständig von den Zellwänden 2 umschlossen, so dass sie in der Figur nicht ersichtlich sind. Es können sich dabei verschieden Anordnungen ergeben, z.B. a) hexagonal-dichteste oder b) kubisch-dichteste Anordnung. Die Leerräume zwischen den kugelförmigen Poren in FIG 8 sind in Wirklichkeit durch die Zellwände 2 gefüllt.

Die Ausführungsvariante gemäß FIG 9 unterscheidet sich von den Ausführungen gemäß FIG 1, FIG 2 und FIG 3 lediglich dadurch, dass die Ecken 6 der Poren 4 gerundet sind. In FIG 9 sind dabei vier verschieden Rundungsradien R₁, R₂, R₃ und R₄ dargestellt.

Alle in den Figuren gezeigten Strukturen werden durch ein generatives Fertigungsverfahren hergestellt, wobei durch die Formgebung der Zellwände 2 und Poren 4 dem porösen Bauteil gewünschte, für seinen Einsatz optimierte Eigenschaften verliehen werden.

## Patentansprüche

1. Verfahren zum Herstellen eines porösen Bauteils mit einstellbarer Struktur, wobei das poröse Bauteil Zellwände (2) aufweist, die zumindest teilweise Poren (4) abgrenzen, wobei das poröse Bauteil durch ein generatives Fertigungsverfahrens, insbesondere durch einen 3D-Druck, gefertigt wird und wobei durch eine Größe und/oder eine Orientierung der Zellwände (2) und/oder der Poren (4) physikalische Eigenschaften des porösen Bauteils eingestellt werden.

2. Verfahren nach Anspruch 1,
wobei die Zellwände (2) des porösen Bauteils aus einem Metall und/oder einem Kunststoff hergestellt werden.

3. Verfahren nach Anspruch 1 oder 2,
wobei die Zellwände (2) des porösen Bauteils aus verschiedenen Materialen hergestellt werden.

4. Verfahren nach einem der vorhergehenden Ansprüche,
wobei die Poren (4) mit einem Gas, einem Kunstsoff und/oder einem Wachs gefüllt werden.

5. Verfahren nach einem der vorhergehenden Ansprüche,
wobei die Oberfläche der Zellwände (2) beschichtet wird, insbesondere mit einer Antioxidationsschicht.

6. Verfahren nach einem der vorhergehenden Ansprüche,
wobei die Zellwände (2) längs einer zu erwarteten Kraftlinie verlaufen.

7. Poröses Bauteil hergestellt mittels eines Verfahrens nach einem der Ansprüche 1 bis 6.

8. Poröses Bauteil nach Anspruch 7,
wobei die einstellbare Struktur einen symmetrischen Aufbau aufweist.

9. Poröses Bauteil nach Anspruch 7 oder 8,
wobei die einstellbare Struktur mehrere Schichten aufweist.
